# EUROPEAN PATENT APPLICATION

(11) **EP 1 688 930 A1**
(43) Date of publication of application: **09.08.2006**
(21) Application number: 06002510.3
(22) Date of filing: 07.02.2006
(51) Int. Cl.: G11B 7/0045

(54) **Dye-based recordable DVD medium, and method and apparatus for recording and reproducing thereof**

(30) Priority: 08.02.2005 JP 2005032329
(71) Applicant: Ricoh Company, Ltd., Tokyo 143-8555 (JP)
(72) Inventor: Yashiro, Tohru, Ohta-ku Tokyo 143-8555 (JP); Nakamura, Yuki, Ohta-ku Tokyo 143-8555 (JP); Mikami, Tatsuo, Ashigarakami-gun Kanagawa (JP)
(74) Representative: Barz, Peter

(57) **Abstract**

It is an object of the present invention to provide a recording and reproducing method for dye-based recordable DVD medium which performs a recording of a shortest mark by one pulse light of a highest intensity, and a recording of the second shortest and following marks by one pulse light with a pulse power less intense than the pulse power of the shortest mark and both head and tail of the pulse are high powered for a predetermined time, wherein the recording is performed on the recording layer containing an organic dye formed on a substrate having a guide groove, wherein the power of irradiated light besides the pulse light which corresponds to the mark formation is 1.2% to 22% based on the pulse power of the shortest mark, and wherein the recording linear velocity is 12m/s or more during recording of each mark.

## Description

### BACKGROUND OF THE INVENTION

### Field of the Invention

The present invention relates to recording and reproducing method and recording and reproducing apparatus for dye-based recordable DVD medium and a dye-based recordable DVD medium suitable for above method and apparatus.

### Description of the Related Art

The development of high-speed DVD±R as high-capacity optical disc has been in the works currently. The elemental technologies such as recording material development for micronization of recording pit, adoption of image compression technology such as MPEG2, shortening of laser diode wavelength for pit reading, and the like are necessary for improvement of recording capacity.

There has been only a few laser diode of red wavelength which are being commercialized such as bar code reader or AlGaInP laser diode of 670nm band for measuring equipment. However, red laser is being fully used in the optical storage market with the density growth of the optical discs. The laser diode of two wavelengths, 635nm band and 650nm band is standardized for light sources of DVD drives. At the same time, commercialized read-only DVD-ROM drives are standardized at a wavelength of 650nm or less.

Generally, pulse width and recording power of the recording pulse by laser emission during recording are optimized at a predetermined recording velocity and the conditions of formed marks or spaces are altered by different recording linear velocities for the dye-based recordable DVD medium in which a pit (mark) is formed by a heat mode. In other words, jitter property may be deteriorated because of the shortage of heat capacity caused by heating pulse needed for mark formation, the variation in the average mark length caused by different heating temperatures relative to the optimal decomposition temperature, or wide or narrow mark width corresponding to the mark length caused by the different duty ratio of optimal heating pulse.

For this reason, the emission waveform of recording pulse for DVD+R is disclosed in "DVD+R 4.7Bytes Basic Format Specifications Ver1.3" and "DVD+R 8.5Bytes Basic Format Specifications Ver1.0", for example. The former is a written standards for single layer 16x compatible DVD+R medium and the latter is a written standards for double layer 2.4× compatible DVD+R medium. However, particularly when recording on the double layer medium at a recording velocity of 2.4 double speeds or more, the quality may not be satisfactory using the emission waveform of recording pulse written in above standards depending on the recording medium.

Moreover, with regard to physical format of DVD-based medium, a format of DVD-R medium in which a portion of the land part called "land pre-pit" is cut has been standardized. If this method is applied, pre-pit information such as pre-pit address, etc. is not appropriately reproduced when the land pre-pit signal (LPPb) is less than 0.16 and when it is more than 0.32, a lot of data error occur because LPP signal itself behaves like noises in the data region. Consequently, cut width of LPP must be finely adjusted by a stamper to be appropriate for the recording material and the cut width must be adjusted so that the LPPb is in the range of 0.16 to 0.32.

The known examples of optical recording medium in which dyes are used for the recording layer include a medium which uses polymethine dye or polymethine dye and light stabilizer as a recording material, a medium having a layer formed of tetraazaporphyrin (porphyrazine) dye or cyanin dye and azo metal chelate dye (salt-forming dye) and reflective layer as a recording layer, a medium using formazan (metal chelate) dye and other dyes as a recording material, a medium using dipirromethene (metal chelate) dye and other dyes as a recording material, and the like and the list goes on and on. Moreover, many mediums performing multipulse recording using dyes as recording material are also known. The prior Patent Literatures relating to the recording method using one pulse light corresponding to a block pulse or one mark include Japanese Patent Application Laid-Open (JP-A) Nos. 2001-243626, 2002-063721, 2001-273636, 2002-298415, 2001-176073, 2001-155339 and US Patent No. 4646103, and the like, for example.

However, there has been no literature which performs a recording on a dye-based recordable DVD medium using one pulse and focuses on the recording waveform when performing a recording at a high linear velocity as in the present invention.

### SUMMARY OF THE INVENTION

The object of the present invention is to provide a recording and reproducing method which can obtain appropriate recording waveform when performing a recording on a dye-based recordable DVD medium at a linear velocity as high as 12m/s or more and even at 30m/s or more. And it is also an object of the present invention to provide a new format method of the recordable DVD system which uses a laser diode having an oscillation wavelength in a shorter wavelength region than CD-based medium, is effective in eliminating unrecorded region of data addition section as similar to LPP method, and has the advantage over DVD-R land pre-pit method in not having fine adjustment of cut width during stamper preparation or a data error caused by the leakage of LPP signal to the data section.

The recording and reproducing method for dye-based recordable DVD medium according to the present invention include a recording of a shortest mark by one pulse light of a highest intensity, and a recording of the second shortest and following marks by one pulse light with a pulse power less intense than the pulse power of the shortest mark and both head and tail of the pulse are high powered for a predetermined time, wherein the recording is performed on the recording layer containing an organic dye formed on a substrate having a guide groove, wherein the power of irradiated light besides the pulse light which corresponds to the mark formation is 1.2% to 22% based on the pulse power of the shortest mark, and wherein the recording linear velocity is 12m/s or more during recording of each mark.

The dye-based recordable DVD medium according to the present invention is used for the recording and reproducing method for dye-based recordable DVD medium according to the present invention.

The recording and reproducing apparatus for dye-based recordable DVD medium according to the present invention has a function to record a shortest mark by one pulse light of a highest intensity, and a function to record the second shortest and following marks by one pulse light with a pulse power less intense than the pulse power of the shortest mark and both head and tail of the pulse are high powered for a predetermined time, wherein the recording is performed on the recording layer containing an organic dye formed on a substrate having a guide groove, wherein the power of irradiated light besides the pulse light which corresponds to the mark formation is 1.2% to 22% based on the pulse power of the shortest mark, and wherein the recording linear velocity is 12m/s or more during recording of each mark for record reproduction by reproducing light.

Furthermore, the recording and reproducing apparatus for dye-based recordable DVD medium according to the present invention has a function to set a recording condition using the dye-based recordable DVD medium according to the present invention.

### BRIEF DESCRIPTION OF THE DRAWINGS

FIG. 1 is a view showing a basic pulse radiation pattern according to the present invention.
FIG. 2A is a view showing an exemplary layer structure of a normal recordable optical recording medium.
FIG. 2B is a view showing an exemplary layer structure of a normal recordable optical recording medium.
FIG. 2C is a view showing an exemplary layer structure of a normal recordable optical recording medium.
FIG. 2D is a view showing an exemplary layer structure of a normal recordable optical recording medium.
FIG. 3A is a view showing an exemplary layer structure of a normal CD-R medium.
FIG. 3B is a view showing an exemplary layer structure of a normal CD-R medium.
FIG. 3C is a view showing an exemplary layer structure of a normal CD-R medium.
FIG. 4A is a view showing an exemplary layer structure of a dye-based recordable DVD medium.
FIG. 4B is a view showing an exemplary layer structure of a dye-based recordable DVD medium.
FIG. 4C is a view showing an exemplary layer structure of a dye-based recordable DVD medium.
FIG. 4D is a view showing an exemplary layer structure of a dye-based recordable DVD medium.
FIG. 5 is a view showing an exemplary waveform of power control corresponding to the present invention.
FIG. 6 is a view showing another exemplary waveform of power control corresponding to the present invention.
FIG. 7 is a view showing another exemplary waveform of power control corresponding to the present invention.
FIG. 8 is a functional block diagram showing an exemplary substantial structure of an optical disc drive.
FIG. 9 is a schematic view of an information-processing device using the optical disc drive shown in FIG. 8.
FIG. 10 is a view showing a jitter dependence on the recording power (W0) of the optical recording mediums of Examples and Comparative Examples.
FIG. 11 is a view showing a measurement result of jitter at a linear velocity of 30.64m/s.

### DESCRIPTION OF THE PREFERRED EMBODIMENTS

### (Recording and Reproducing Method for Dye-based Recordable DVD Medium and Dye-based Recordable DVD Medium)

The recording and reproducing method for dye-based recordable DVD medium according to the present invention include a recording of a shortest mark by one pulse light of a highest intensity, and a recording of the second shortest and following marks by one pulse light with a pulse power less intense than the pulse power of the shortest mark and both head and tail of the pulse are high powered for a predetermined time, wherein the recording is performed on the recording layer containing an organic dye formed on a substrate having a guide groove, wherein the power of irradiated light besides the pulse light which corresponds to the mark formation is 1.2% to 22% based on the pulse power of the shortest mark, and wherein the recording linear velocity is 12m/s or more during recording of each mark.

The dye-based recordable DVD medium according to the present invention is used for the recording and reproducing method for dye-based recordable DVD medium according to the present invention.

Hereinbelow, the detail of the dye-based recordable DVD medium of the present invention will be described through the explanation of the recording and reproducing method for dye-based recordable DVD medium of the present invention.

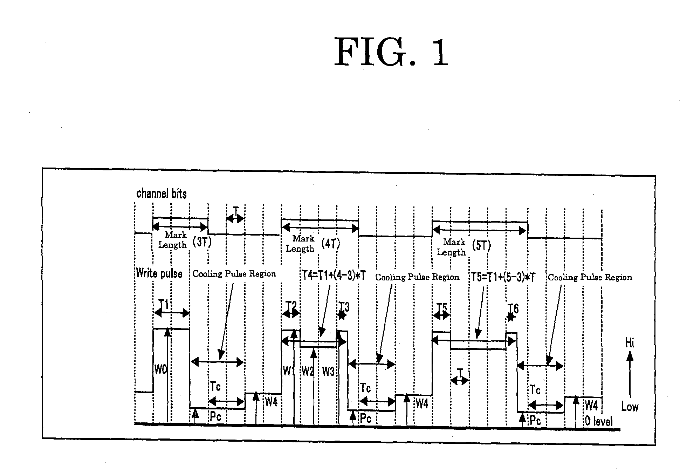

FIG. 1 is a view showing a basic pulse radiation pattern of the present invention.

The pulse length (T1) of the shortest mark is preferably 1/16 times to 48/16 times of the base clock cycle, T and more preferably 25/16 times to 48/16 times. It is because when the pulse length (T1) is short, recording sensitivity is likely to be deteriorated.

The high powered length (T2) with an additional power added to the head of the pulse for the second shortest and following marks, the marks besides the shortest mark, is preferably 1/16 times to 32/16 times of the base clock cycle, T and more preferably 16/16 times to 32/16 times. Furthermore, the high powered length (T3) with an additional power added to the tail is preferably 0/16 times to 32/16 times of the base clock cycle, T and more preferably 0/16 times to 16/16 times.

The additional power (W1) relative to the power (W2) of the portion added with no additional power is preferably more than W1/W2=1.0 times and is 2.0 times or less. When it is out of the range, the mark length is likely to be off from the base clock and it is difficult to obtain appropriate jitter. Furthermore, the relations between W1, W2, pulse power of the shortest mark (W0) and the power of the tail of the marks besides the shortest mark (W3) satisfies the equation, W0≥W1≥W3. When W1≥W3 is satisfied, W3>W2 is also satisfied and when W1>W3 is satisfied, W3≥W2 is also satisfied.

A light besides the pulse light which corresponds to the mark formation is irradiated prior to each pulse light in the present invention.

"An irradiated light besides the pulse light which corresponds to the mark formation" is a part from which the recording pulse light for mark formation including cooling pulse has been eliminated from the irradiated light during recording and it corresponds to the level W4 of the irradiated light between recording pulses in FIG. 1.

The irradiated light power, W4 besides the pulse light which corresponds to the mark length formation is supposed to be 1.2% to 22% based on the pulse power of the shortest mark, W0. An appropriate jitter property is easily obtainable when it is 1.2% to 22% because W4 has a role of preheating during mark formation. When it is less than 1.2%, preheating effect of W4 may not be satisfactory and when it is more than 22%, the mark length may be adversely inappropriate by preheating. It is preferably 2.4% to 19.5%.

Moreover, a cooling pulse (Tc) may be set to reduce the heat interaction between marks. The length of the pulse irradiation time in this case is preferably 40/16 or less of the base clock cycle, T. When Tc becomes long, irradiation time of W4 is shortened and it is difficult to obtain the effect of the present invention.

The recording linear velocity is set at 12m/s or more and it is preferably 30m/s or more.

By selecting the pulse waveform as described above, it becomes possible to perform an appropriate recording with low jitter particularly at a high linear velocity.

The linear density of DVD medium differs between single and double layer recording mediums and it is 3.49m/s for single layer and 3.83m/s for double layer. An appropriate effect can be obtained when the recording linear density of the double layer recording medium, the reproduction linear velocity relative to DVD signal, is 3.83±0.03m/s.

In conventional art, a recording method in which one mark is written with multiple pulses (multipulse) is also proposed. However, when the recording speed is accelerated, variation may occur in rise and decay time of the pulse light because of the use of multiple pulses and it is difficult to employ at a recording linear velocity of 12.64m/s or more for its difficulty in responding at high speed.

On the other hand, the present invention has an advantage in being able to provide a recording method which has less fluctuation in recording quality compared to the multipulse recording because one mark is recorded with one pulse light. Moreover, in address detection during writing, the light amount during recording can be easily averaged because of the simpler recording waveform than multipulse method, making it possible to detect addresses by averaging the amount of light in marked parts as well as the amount of reflective light in spaces. Furthermore, it has advantages in that even when a cooling pulse of 0.75mW or less is placed at the tail of the pulse, the address detection can be performed relatively easily by setting a high irradiance of light in spaces (W4).

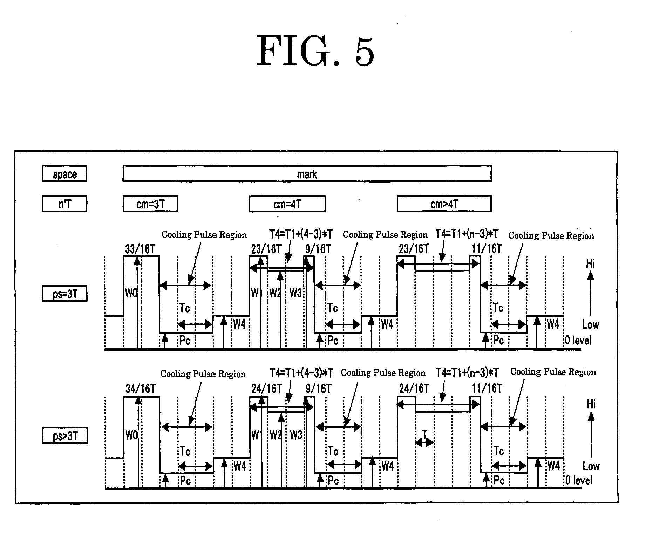

Exemplary waveforms of power control according to the present invention are shown in FIGS. 5 to 7.

In consideration of the effect of heat interaction, it is possible to realize a low jitter recording by discriminating the heating pulse width of the recording pulse which forms a mark of the most recent space length being the shortest by if it is being the shortest mark or not, and by setting the heating pulse width of the shortest mark longer than the heating pulse width of the mark which is not shortest.

Moreover, it is possible to realize a still lower jitter recording by discriminating the heating pulse width of the recording pulse which forms a shortest mark by if the most recent space length of the shortest mark is being the shortest or not, and by setting the heating pulse width of the mark of the most recent space length being the shortest shorter than the heating pulse width of which the most recent space length is not shortest.

The correction amount (length) to set the heating pulse width short is preferably in the range of 2/16T or less in particular. If the heating pulse width of the pulse forming a mark is approximately equivalent to that of the other marks when the most recent space length of the mark being formed is shortest, space length of the most recent becomes short by heat interaction and jitter is slightly deteriorated. In this case, it is effective to set the heating pulse width for recording marks short. Needless to say, it is also effective to set the front edge of the heating pulse short for making the pulse width short.

Moreover, if the heating pulse width of the pulse forming marks is shorter than 2/16T when the most recent space length of the mark being formed is shortest, it is unfavorable because the mark length itself becomes too short.

The correction amount (length), when setting the heating pulse width of the shortest mark longer than the other marks, is preferably 1/16T to 3/16T. The heating pulse width of the shortest mark is set long by correcting in above range because it is difficult to form a shortest mark when the recording linear velocity is increased in particular.

Next, the necessary terms for recording layer include optical properties.

Of the optical properties, refraction index "n" of a single recording layer relative to the light of a wavelength near long wavelength close to the recording and reproducing wavelength, which is the light in the region of ±5nm wavelength of recording and reproducing light, is preferably in the range of 1.5 ≤ n ≤ 3.0 and the extinction coefficient "k" is preferably in the range of 0.02 ≤ k ≤ 0.2. If "n" is less than 1.5, it is unfavorable because it makes it difficult to obtain sufficient optical change and modulation degree of recording is lowered. If "n" is more than 3.0, it is unfavorable because the wavelength dependency becomes too much and error occurs even in the region of recording and reproducing wavelength. If "k" is less than 0.02, it is unfavorable because the recording sensitivity is deteriorated and if "k" is more than 0.2, it is unfavorable because it is difficult to obtain reflectance of 50% or more.

Meanwhile, DVD is standardized near 650nm for play-only models; however, wavelength of the recorded light for recording medium is standardized at 650nm to 660nm for general use besides 635nm for authoring-only medium. However, these wavelengths are center wavelengths and it swings to the sides of short and long wavelengths by the fluctuation in LD production. Moreover, the wavelength of LD is shifted to the side of long wavelength by its nature in general when the temperature is increased. The present invention is a method operable at a recording wavelength of 600nm to 720nm including above wavelength region and preferably at 635nm to 665nm.

Next, wobble property of the wobbling guide groove disposed on the substrate will be discussed. "T" is a base clock cycle for identifying wobble frequency and it is approximately 0.133µm or approximately 38 nanoseconds in terms of time for DVD (4.7GB) medium.

The wobble frequency band equivalent of 150T to 400T is used in general, however, the wobble frequency of this frequency band is too low when the data, whether it is frequency modulation or phase modulation, is added, and the space between previous data and additional data becomes considerably large not favorable for high density recording. On the other hand, land pre-pit, LPP is disposed on DVD-R and the position of data addition is controlled by this LPP signal.

However, in LPP method, LPP is not appropriately read out when the signal amplitude of LPP is too small and a problem arises in that the data error occurs frequently because of the leakage of LPP signal itself into the written data when LPP is too large. LPP should be in the range of 0.16 ≤ LPPb ≤ 0.32 and preferably in the range of 0.18 ≤ LPPb ≤ 0.26 and cut width of land must be finely controlled during stamper preparation.

At the same time, when a high-frequency wobble is utilized, LPP is no longer needed and frequent occurrence of the data error as in LPP method does not occur because synchronization is performed by wobble modulation. The preferable wobble frequency is 4T to 96T as prescribed in the present invention 3. When it is smaller than 4T, frequency becomes too high to be detected and there are troubles in terms of rotation control or address detection reliability. On the other hand, when it is larger than 96T, frequency is too low and joint space during data addition would be too large resulting in deterioration of capacity or data processing speed, etc.

When Wo/PP, a ratio of wobble amplitude of a signal (Wo) passed through a proper filter such as high and low pass filters of 4MHz and 30kHz to push pull signal (PP) passed through a proper filter such as a filter of 30kHz, satisfies 0.1≤Wo/PP≤0.4, synchronization of wobble amplitude of the DVD medium of the present invention is easy and its preferable range is 0.15≤Wo/PP≤0.30. When Wo/PP is less than 0.1, the signal intensity is insufficient for synchronization and when it is more than 0.4, data error is likely to increase. However, the degree of effect on data error occurrence by a medium of large LPP is small and the data error accompanying the increase in wobble amplitude is moderate compared with LPP method.

Furthermore, an advanced cut width control technology is required for making LPP cut width of LPP method within the range of 0.16 to 0.32 during stamper preparation. However, it is possible to dramatically improve stamper or medium yield because it only requires regulating high frequency source origin and the degree of wobble fluctuation (degree of fluctuation may be produced voluntarily with an appropriate reproducibility in the wobble fluctuation control circuit) in the high-frequency wobble method.

As for the groove form of a substrate having above format, the groove depth is preferably 1,000Å to 2,500Å and more preferably 1,500Å to 2,000Å in the case of a recording layer formation by solvent coating using organic dye, for example. When the groove depth is less than 1,000Å, it is impossible to control tracking because sufficient push pull signal cannot be obtained. When it is more than 2,500Å, it is unfavorable because transfer property is not appropriate during substrate formation.

Moreover, groove depth of a dye when a dye-based recording layer is disposed is preferably in the range of 1,200≤d1×m≤160,000 when "mT" (m is a whole number) represents wobble frequency and "d1" represents groove depth of a dye. When "d1×m" is less than 1,200, sufficient difference signal cannot be obtained and it is impossible to operate a satisfactory tracking during recording and reproducing. When "d1×m" is more than 160,000, it is unfavorable for tracking because of the occurrence of oscillation and it is substantially impossible to exceed 160,000 because of the groove depth limitation of the substrate due to the transfer limit of the above substrate formation.

Furthermore, track pitch of approximately 0.64µm to 0.8µm is needed for securing the capacity of 4GB to 5GB of recording density. The groove width depends on the recording material; however, a width of 0.18µm to 0.40µm half bandwidth is applicable for almost all the organic materials.

Next, the layer composition, required property of each layer and construction material of the dye-based recordable DVD medium of the present invention will be explained.

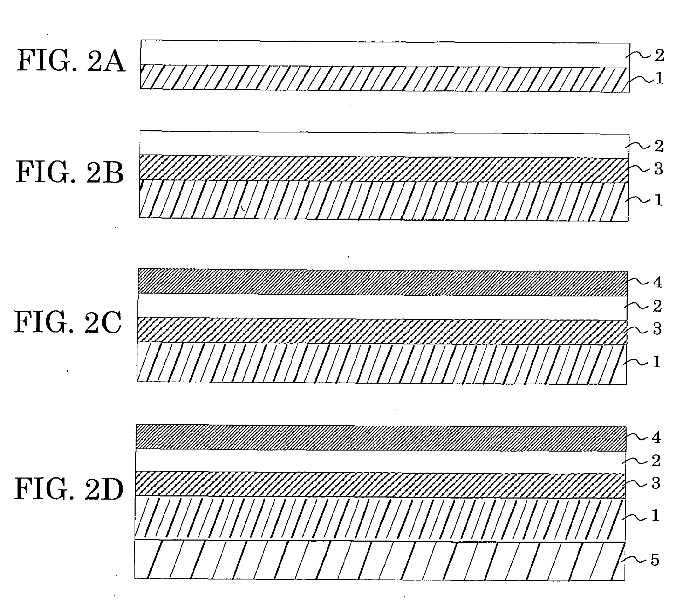

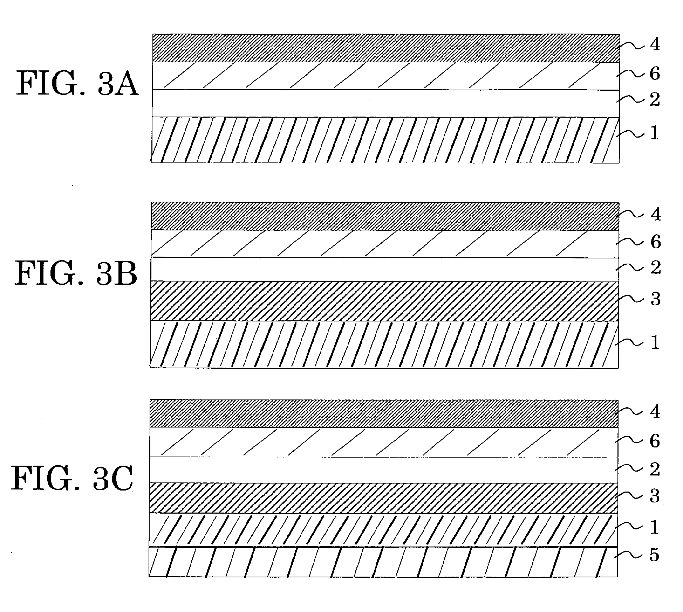

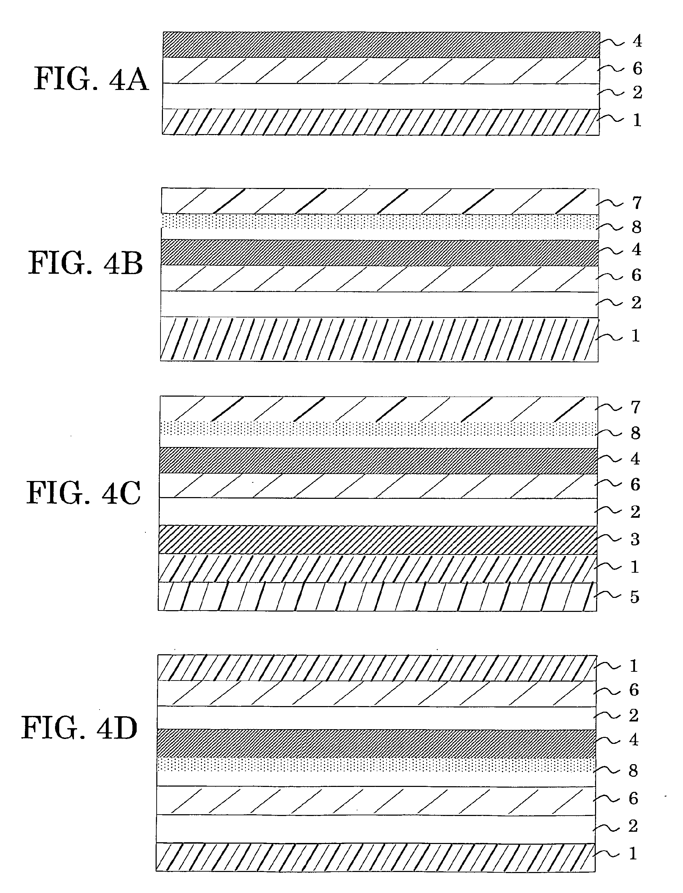

FIGs. 2A to 2D show exemplary layer composition of normal recordable optical discs. FIG. 2A contains a recording layer 2 disposed on the substrate 1. FIG. 2B contains an undercoat layer 3 and a recording layer 2 disposed on the substrate 1. FIG. 2C contains an undercoat layer 3, a recording layer 2 and a protective layer 4 disposed on the substrate 1. FIG. 2D contains an undercoat layer 3, a recording layer 2 and a protective layer 4 disposed on the substrate 1 and further contains a hard coated layer 5 disposed on the other side of the substrate 1. FIGs. 3A to 3C show exemplary layer composition of normal CD-R mediums. FIG. 3A contains a recording layer 2, a metal reflective layer 6 and a protective layer 4 disposed on the substrate 1. FIG. 3B contains an undercoat layer 3, a recording layer 2, a metal reflective layer 6 and a protective layer 4 disposed on the substrate 1. FIG. 3C contains an undercoat layer 3, a recording layer 2, a metal reflective layer 6 and a protective layer 4 disposed on the substrate 1 and further contains a hard coated layer 5 disposed on the other side of the substrate 1. FIGs. 4A to 4D show layer composition of recordable DVD mediums. FIG. 4A contains a recording layer 2, a metal reflective layer 6 and a protective layer 4 disposed on the substrate 1. FIG. 4B contains a recording layer 2, a metal reflective layer 6, a protective layer 4, an adhesive layer 8 and a protective substrate 7 disposed on the substrate 1. FIG. 4C contains an undercoat layer 3, a recording layer 2, a metal reflective layer 6, a protective layer 4, an adhesive layer 8 and a protective substrate 7 disposed on the substrate 1 and further contains a hard coated layer 5 disposed on the other side of the substrate 1. FIG. 4D contains two protective layer 2, a protective layer 4, two metal reflective layer 6 and an adhesive layer 8 sandwitched by the substrate 1 from both sides. FIG. 4D shows a composition of a one-side double layer recording medium in particular. A favorable basic composition of the dye-based recordable DVD medium of the present invention is a composition in which the first and second substrates (protective substrate) are attached together with an adhesive bond with recording layer facing inside as shown in FIGS 4B to 4D.

The recording layer may be a single organic dye layer or a laminated layer of organic dye and reflective layers for the improvement of reflectance. An undercoat layer or a protective layer may be disposed between recording layer and substrate and the composition may be a laminated structure having two or more of each layer for improvement of the function. The most normally used composition is a structure having a first substrate, organic dye layer, reflective layer, protective layer, adhesive layer and a second substrate

### (protective substrate).

### -Substrate-

A substrate must be transparent relative to the used layer when performing recording and reproducing from the substrate side, however, it does not have to be transparent when performing recording and reproducing from the protective layer side. Examples of substrate material include plastic materials such as polyester resin, acrylic resin, polyamide resin, polycarbonate resin, polyolefin resin, phenol resin, epoxy resin, polyimide resin, and the like, glasses, ceramics, metals, or the like. A preformat such as guide groove or guiding pit for tracking and address signals may be formed on the surface of the substrate.

### -Recording Layer-

A recording layer generates an optical change of some sort by laser beam irradiation and records the information by the change. A material containing an organic dye as a main element is used for the recording layer. The main element means having a sufficient amount of organic dye for performing recording and reproducing. Normally, only organic dyes are used with an exception of small amount of additives which are added accordingly.

Examples of organic dyes include azos, formazans, dipyrromethenes, (poly) methanes, naphthalocyanines phthalocyanines, tetraazaporphyrins, squaryliums, chroconiums, pyryliums, naphthoquinones, anthraquinones (indanthrenes), xanthenes, triphenylmethanes, azulenes, tetrahedrocholines, phenanthrenes, triphenothiazine dyes or metallic complexes thereof. Of these, azo (metal chelate) dye, formazan (metal chelate) dye, squarylium (metal chelate) dye, dipyrromethene (metal chelate) dye, trimethinecyanine dye, tetraazaporphyrin dye are preferable.

The heat decomposition property of above dyes is preferably having decomposition starting temperature of 100°C to 360°C and more preferably having decomposition starting temperature of 100°C to 350°C. When the decomposition starting temperature is more than 360°C, pit formation during recording cannot be performed satisfactory and jitter property is deteriorated. When it is less than 100°C, storage stability of a disc is deteriorated.

Other organic dyes, metals and metal compounds may be mixed with above dyes for the purpose of improving optical property, recording sensitivity and signal property. Or dye layers may be laminated with other layers composed of organic dyes, metals and metal compounds.

Examples of these metals and metal compounds include In, Te, Bi, Se, Sb, Ge, Sn, Al, Be, TeO₂, SnO, As and Cd and each may be used by being dispersion mixed or laminated.

Furthermore, various polymer materials such as ionomer resin, polyamide resin, vinyl resin, natural polymer, silicone, liquid rubber, etc. or silane coupling agent, and the like may be dispersion mixed or stabilizer such as transition metal complex, dispersant, fire retardant, lubricant, antistatic agent, surfactant, plasticizer, and the like may be used together for property improvement.

The recording layer may be formed by normal methods such as vapor deposition, sputtering, CVD, solvent coating, and the like. When employing a coating method, above dye, etc. is dissolved in an organic solvent and the layer formation is performed using conventional coating method such as spraying, roller coating, dipping, spin coating, and the like. Examples of organic solvent used include alcohols such as methanol, ethanol, isopropanol, and the like, ketones such as acetone, methylethylketone, cyclohexanone, and the like, amides such as N,N-dimethylformamide, N,N-dimethylacetoamide, and the like, sulfoxides such as dimethylsulfoxide, and the like, ethers such as tetrahydrofuran, dioxane, diethylether, ethyleneglycolmonomethylether, and the like, esters such as methyl acetate, ethyl acetate, and the like, aliphatic halogenated hydrocarbons such as chloroform, methylene chloride, dichloroethane, carbon tetrachloride, trichloroethane, and the like, aromatic series such as benzene, xylene, monochlorobenzene, dichlorobenzene, and the like, cellosolves such as methoxyethanol, ethoxyethanol, and the like, carbon hydrides such as hexane, pentane, cyclohexane, methylcyclohexane, and the like.

The thickness of the recording layer is preferably 100Å to 10µm and more preferably 200Å to 2,000Å.

### -Undercoat Layer-

Undercoat layers are disposed for the purposes of (1) improvement of adhesive property, (2) barrier against water or gas, (3) improvement of storage stability of recording layers, (4) improvement of reflectance, (5) protection of substrate from solvents, (6) formation of guide groove, guiding pit and preformat, and the like. Various polymers such as ionomer resin, polyamide resin, vinyl resin, natural resin, natural polymer, silicone, liquid rubber, and the like or silane coupling agent, and the like may be used for the purpose (1). Inorganic compounds such as SiO, MgF, SiO₂, TiO, ZnO, TiN, SiN, and the like, and metals or semimetals such as Zn, Cu, Ni, Cr, Ge, Se, Au, Ag, Al, and the like besides above polymer materials may be used for the purposes (2) and (3). Metals such as Al, Au, Ag, and the like and organic thin films having metallic luster which contains methine dye, xanthene dye, and the like may be used for the purpose (4). And ultraviolet curing resin, heat curable resin, thermoplastic resin, and the like may be used for the purposes (5) and (6).

The thickness of the undercoat layer is preferably 0.01µm to 30µm and more preferably 0.05µm to 10µm.

### -Reflective Layer-

Examples of the material for the reflective layer include metals or semimetals such as Au, Ag, Cr, Ni, Al, Fe, Sn, and the like which can obtain high reflectance by itself and have a corrosion resistance. Of these, Au, Ag and Al are particularly preferable in terms of appropriate reflectance and productivity. And these metals or semimetals may be used alone or as an alloy of two or more.

The forming method of the reflective layer includes vapor deposition, sputtering, and the like and the thickness is preferably 50Å to 5,000Å and more preferably 100Å to 3,000Å.

### -Protective Layer and Hard Coated Layer on the Substrate Side-

The protective layer and hard coated layer on the substrate side are used for the purposes of (1) protection of recording layer (reflection absorbing layer) from scratch, dust, smear, etc., (2) improvement of storage stability of the recording layer (reflection absorbing layer), (3) improvement of reflectance, and the like. The same material as used for the undercoat layer may be used for these purposes. Or, organic materials including thermosoftening and thermofusing resin such as polymethylacrylate resin, polycarbonate resin, epoxy resin, polystyrene resin, polyester resin, cellulose resin, aliphatic hydrocarbon resin, natural rubber, styrene-butadiene resin, chloroprene rubber, wax, alkyd resin, drying oil, rosin, and the like may also be used. Of these, ultraviolet-curing resin is most preferable because of the excellent productivity.

The thickness of the protective layer or hard coated layer on the substrate side is preferably 0.01µm to 30µm and more preferably 0.05µm to 10µm.

The undercoat layer, protective layer and hard coated layer on the substrate side may also contain stabilizer, dispersant, fire retardant, lubricant, antistatic agent, surfactant, plasticizer, and the like as similar to the recording layer.

### -Protective Substrate-

A protective substrate must be transparent relative to the used laser beam when the laser beam is irradiated from the protective substrate side, however, it does not have to be transparent when used simply as a protective plate.

The material which can be used for the protective substrate include plastic materials such as polyester resin, acrylic resin, polyamide resin, polycarbonate resin, polyolefin resin, phenol resin, epoxy resin, polyimide resin, and the like, glass, ceramic, metal, and the like as similar to the substrate material.

### -Adhesive Layer-

The material of the adhesive layer may be any material which can attach two recording mediums; however, it is preferably ultraviolet-curing adhesive or hot-melt adhesive in terms of appropriate productivity.

### (Recording and Reproducing Apparatus)

The recording and reproducing apparatus for dye-based recordable DVD medium of the present invention has a function to set a recording condition using the dye-based recordable DVD medium of the present invention.

An optical disc used as a recording apparatus of high-capacity information is normally recorded and reproduced by an optical disc drive (recording and reproducing apparatus). Next, outlines of the composition of optical disc and optical disc drive will be explained.

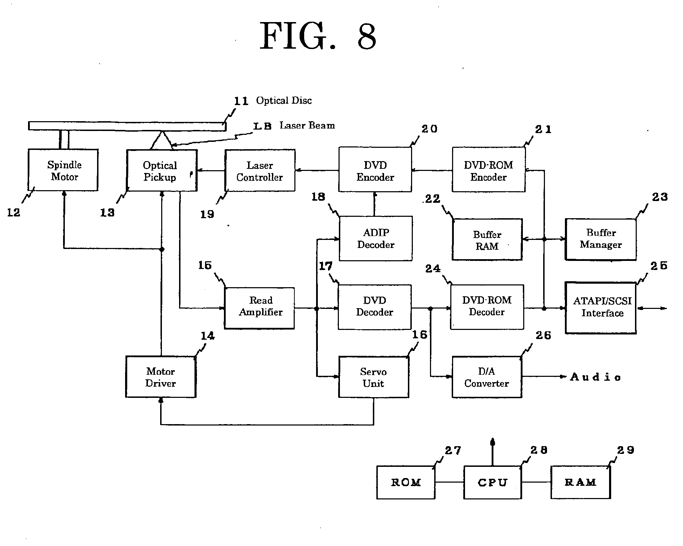

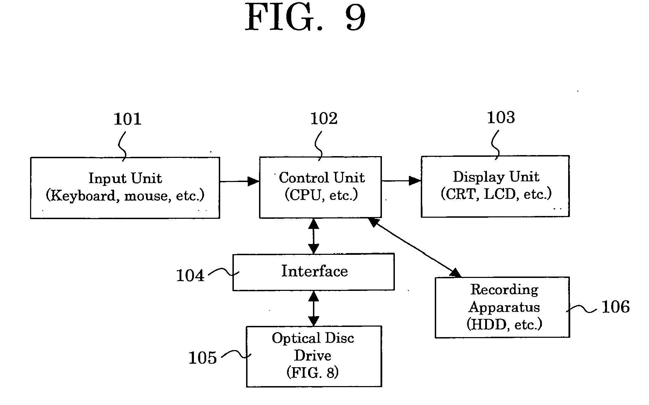

DVD-RAM WO, DVD-R, DVD+R, DVD-RAM, DVD-RW and DVD+RW discs are writable (recordable) DVD (Digital Versatile Disc). DVD-RAM WO, DVD-R and DVD+R are write-once DVD. Moreover, DVD-RAM, DVD-RW and DVD+RW are writable DVD. Recording and reproducing of the information of these optical discs such as DVD+R, DVD+RW, etc. are performed by a drive as shown in FIG. 8.

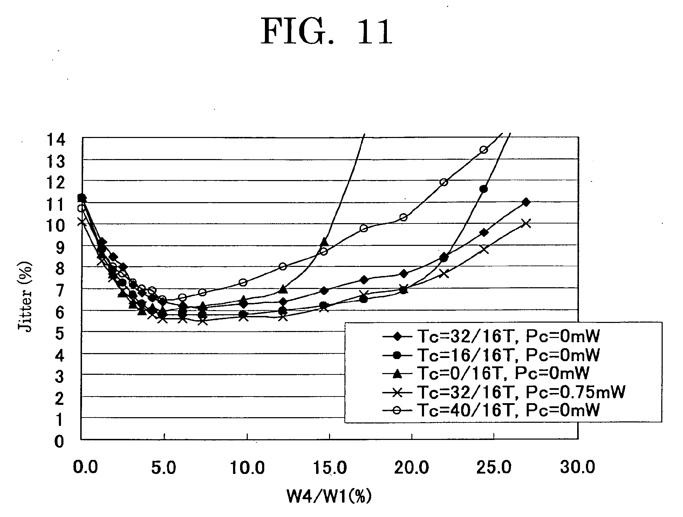

FIG. 8 is a functional block diagram showing an exemplary substantial structure of the optical disc drive. In FIG. 8, 11 represents an optical disc, 12 represents a spindle motor, 13 represents an optical pickup, 14 represents a motor driver, 15 represents a read amplifier, 16 represents a servo unit, 17 represents a DVD decoder, 18 represents a ADIP decoder, 19 represents a laser controller, 20 represents a DVD encoder, 21 represents a DVD-ROM encoder, 22 represents a buffer RAM, 23 represents a buffer manager, 24 represents a DVD-ROM decoder, 25 represents a ATAPI/SCSI interface, 26 represents a D/A converter, 27 represents a ROM, 28 represents CPU, 29 represents a RAM, "LB" represents a laser beam and "Audio" represents an audio output signal.

The arrows show the direction of main data flow and the connections between each block and CPU 28 which controls each block are omitted and represented by a heavy line in FIG. 8. The control program which is written by the code readable in CPU 28 is stored in ROM 27. When the power source of the optical disc drive is turned on, the program is loaded to the main memory (not shown) and CPU 28 stores the required data for control in RAM 29 once while controlling each action of above parts according to the program.

The composition and action of the optical disc drive are as follow. The optical disc 11 is rotary activated by the spindle motor 12. The spindle motor 12 is controlled by the motor driver 14 and servo unit 16 so as to have a constant linear or angular velocity. It is possible to change the linear or angular velocity in stages.

The optical pickup 13 has built-in laser diode (not shown), optical system, focus actuator, track actuator, light receiving element and position sensor and irradiates laser beam, LB to the optical disc 11. And the optical pickup 13 can be moved in a sledge direction by the seek motor. These focus actuator, track actuator and seek motor are controlled so that the spot of the laser beam LB is positioned to an objected place of the optical disc 11 by the motor driver 14 and servo unit 16 based on the signal obtained from the light receiving element and position sensor.

During reading, a reproduction signal obtained by the optical pickup 13 is entered in the DVD decoder 17 after it has become a binary signal by being amplified in the read amplifier 15. The entered binary data is demodulated by an eight to sixteen modulation in the DVD decoder 17. The recorded data is modulated 8 bits at a time (Eight to Sixteen Modulation) and 8 bits are converted to 16 bits in this modulation. In this case, binding bits are added so as to have equal numbers of "1" and "0" on the average. This is called "DC component suppression" and slice level fluctuation of DC-suppressed reproduction signal is inhibited.

Demodulated data is deinterleaved and processed for error correction. And then the data is entered in the DVD-ROM decoder 24 and processed for further error correction to improve data reliability. The data which has been processed for error correction twice is stored once in the buffer RAM 22 by the buffer manager 23 and transferred to the host computer (not shown) at once through ATAPI/SCSI interface 25 as a gathered sector data. In the case of music data, output data from the DVD decoder 17 is entered in the D/A converter 26 and read as an analog audio output signal, "Audio".

During writing, the data sent from a host computer through ATAPI/SCSI interface 25 is accumulated once in the buffer RAM 22 by the buffer manager 23. And then a write operation will start, however, it is necessary to position the laser spot to the starting point of writing before it start. The starting point can be obtained by a wobble signal written in advance on the optical disc 11 by a wobbling track in the case of DVD+RW and DVD+R.

The above starting point can be obtained by land pre-pit in the case of DVD-RW and DVD-R and it can be obtained by pre-pit for DVD-RAM and write only DVD-RAM.

An address information called "address in pre-groove (ADIP)" is contained in the wobble signal of DVD+RW and DVD+R discs and it is read by ADIP decoder 18. The synchronized signal generated by ADIP decoder 18 is entered in DVD encoder 20 making it possible to write data in an exact location on the optical disc 11. The data in the buffer RAM 22 is added with error correction code or interleaved in DVD-ROM encoder 21 or DVD encoder 20 and recorded on the optical disc 11 by the recording waveform of the present invention through laser controller 19 and optical pickup 13.

The recording and reproducing apparatus for dye-based recordable DVD medium according to the present invention has a function to record a shortest mark by one pulse light of a highest intensity, and a function to record the second shortest and following marks by one pulse light with a pulse power less intense than the pulse power of the shortest mark and both head and tail of the pulse are high powered for a predetermined time, wherein the recording is performed on the recording layer containing an organic dye formed on a substrate having a guide groove, wherein the power of irradiated light besides the pulse light which corresponds to the mark formation is 1.2% to 22% based on the pulse power of the shortest mark, and wherein the recording linear velocity is 12m/s or more during recording of each mark for the record reproduction by reproducing light. It is therefore possible to realize a high-quality recording at a high linear velocity using the recording and reproducing apparatus for dye-based recordable DVD medium of the present invention.

Furthermore, it is also possible to set an optimal recording condition for a disc using the dye-based recordable DVD medium in which the pulse power information optimal for the shortest mark and the irradiated light power information besides pulse light which correspond to the mark formation are recorded in the guide groove in advance in the recording and reproducing apparatus of the present invention. In other words, performing an optimal recording without recording error is possible by setting a recording condition by reading the above pulse power information recorded in the guide groove in the recording and reproducing apparatus.

In the case of DVD+R, above pulse power can be set by encoding ADIP information recorded in the guide groove as wobble signal, for example.

FIG. 9 is a schematic view of an information-processing device using the optical disc drive as shown in FIG. 8.

The information-processing device is equipped with main control unit 102, interface 104, recording unit 106, input unit 101, display unit 103, and the like.

The main control unit 102 is composed of CPU (central processing unit, microcomputer, etc.), main memory (which are not shown), and the like and controls the entire host computer.

The interface 104 is a bidirectional communication interface with the optical disc drive 105 and complies with the standard interfaces such as ATAPI and SCSI, etc. The interface 104 is connected to the interface 25 of aforesaid optical disc drive 105. Meanwhile, the connection pattern between each interface can be wireless using infrared rays, etc. or a cable connection using communication lines such as communication cable (SCSI cable, for example).

A program written with the code readable by the microcomputer of the main control unit 102 is stored in the recording unit 106 (HDD, hard disc, etc.). When the driving power source of the information processing device is turned on, the above program is loaded in the main memory of the main control unit 102.

The display unit 103 is equipped with a display part (not shown) such as CRT, liquid crystal display (LCD), plasma display panel (PDP), etc. and displays various information from the control unit 102.

The input unit 101 is equipped with at least one of input mediums (not shown) such as keyboard, mouse, pointing device, etc. and notifies the main control unit 102 various information entered by users. The information from the input medium may be entered by a wireless system. Moreover, examples of the unit of which display and input units are combined include CRT with a touch panel. And the information processing device is loaded with an operating system (OS). All the devices making up the information processing device are administered by an operating system.

By the present invention, it is possible to perform a recording on the dye-based recordable DVD medium at a linear velocity of 12m/s or more with low jitter and error. And a data addition can be effectively performed using high-frequency wobble format which can be produced more easily than land pre-pit format used for DVD-R.

Furthermore, it is possible to provide a recording and reproducing method for dye-based DVD medium which can reduce unrecorded region in the head of additional data and has a low rate of error occurrence.

### Examples

Hereinbelow, the invention is explained in detail referring to Examples and Comparative Examples, but following Examples and Comparative Examples should not be construed as limiting the scope of this invention.

### (Example and Comparative Example)

A second reflective layer containing AgIn (with a ratio of approximately 99.5/0.5) with a thickness of approximately 1,500Å was formed on the surface of the second substrate made of polycarbonate with 120mm diameter and 0.57mm thickness having a irregular pattern of guide groove with 320Å groove depth, 0.25µm groove width (bottom width), 0.74µm track pitch and about 32T wobble frequency by sputtering using Ar as a sputtering gas.

Next, a second recording layer of approximately 800Å thickness was disposed on the surface of the reflective layer by spin coating of a coating liquid in which squarylium dye compounds expressed by the following Structural Formula 1 was dissolved in 2,2,3,3-tetrafluoropropanol. The photoabsorption spectrum of the second recording layer had a maximum absorption wavelength of 607nm and absorbance at the maximum absorption wavelength of 1.19. The dye thickness was confirmed by cross-sectional TEM image. The heat decomposition temperature of this dye was 280°C.

Furthermore, ZnS-SiC (with a ratio of 8/2) was disposed on the second recording layer by sputtering using Ar as a sputtering gas to form an inorganic protective layer of approximately 1,500Å and the second information substrate was produced.

At the same time, a first recording layer of approximately 500Å thickness was disposed on the surface of the first substrate made of polycarbonate with 120mm diameter and 0.58mm thickness having a irregular pattern of guide groove with 1,500Å groove depth, 0.25µm groove width (bottom width) and 0.74µm track pitch by spin coating of a coating liquid in which a mixture of squarylium dye compounds expressed by the following Structural Formula 1 and formazan metal chelate expressed by the following Structural Formula 2 with a weight ratio of 7/3 was dissolved in 2,2,3,3-tetrafluoropropanol. And AgIn with a ratio of approximately 99.5/0.5 was disposed on the first recording layer by sputtering using Ar as a sputtering gas to form a reflective layer of approximately 120Å thickness and the first information substrate was produced.

Next, the first and second information substrates are attached with an ultraviolet-curing adhesive (KARAYAD DVD576 by Nippon Kayaku Co., Ltd.) to produce an optical recording medium of one-side double layer structure as shown in FIG. 4D.

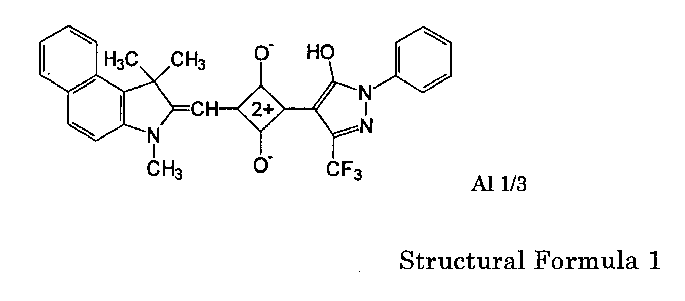

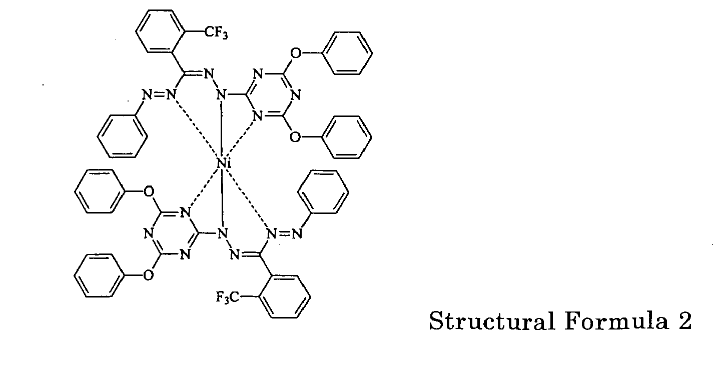

A reproduction evaluation was conducted at a linear velocity of 3.83m/s after DVD (8-16) signal was recorded in the first recording layer of the optical recording medium under the condition of 657nm wavelength, NA0.65 and 30.64m/s linear velocity. An evaluation apparatus, ODU1000 by Pulstec Industrial Co., Ltd. was used for evaluation.

The jitter dependence on recording power (W0) was measured at 3 conditions of W4 being 0mW, 0.75mW and 1.5mW provided that W0=W1=W3, W1/W2=1.5 and irradiated light power of cooling pulse Pc=W4 are satisfied using the waveform of recording pulse as shown in FIG. 5. Meanwhile, when W4 is 1.5mW, W4/W1 is 3.2%; when W4 is 0.75mW, W4/W1 is 1.6%; and when W4 is 0mW, W4/W1 is 0%.

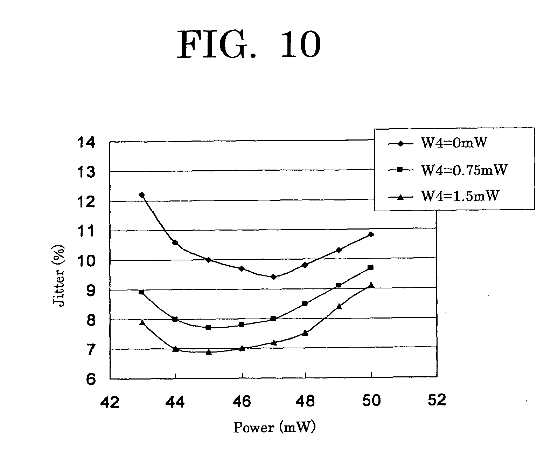

As a result, the jitter was reduced in an order of W4=1.5mW>0.75mW>0mW and an appropriate jitter of 9% or less, a standard value for DVD+R was obtained when the power was in the range of 43mW to 48.5mW with W4 being 1.5mW and 0.75mW as shown in FIG. 10.

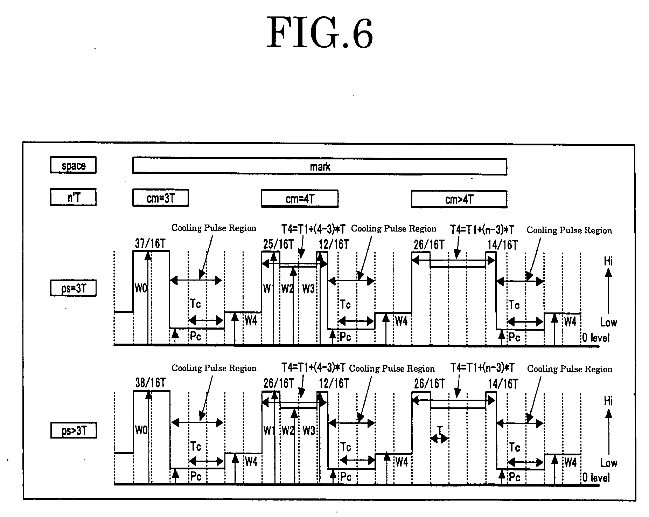

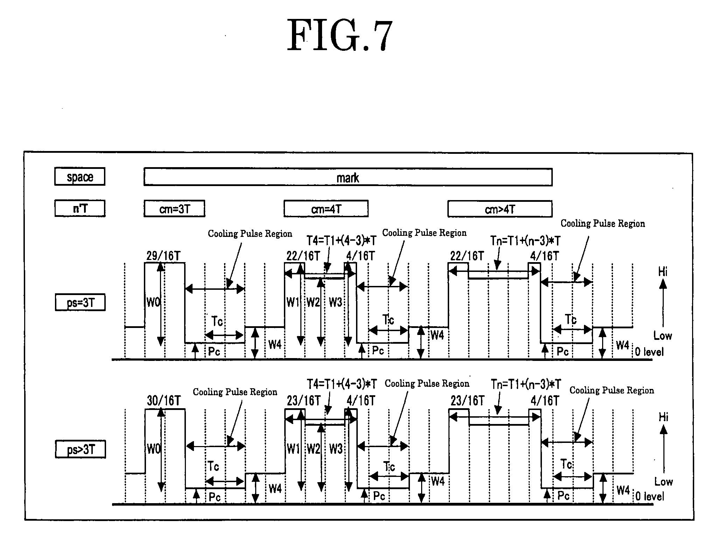

Moreover, jitter was measured by altering W4/W1, Tc and Pc. The waveform of recording pulse as shown in FIG. 6 was used at a linear velocity of 30.64m/s and the waveform of recording pulse as shown in FIG. 7 was used at a linear velocity of 12.64m/s. The condition of recording power were W1=41mW and W2=29.75mW.

As a result, an appropriate property which satisfies DVD+R standard, 9% or less was obtained at 30.64m/s when Tc=32/16T and W4/W1 was 1.2% to 22% as shown in FIG. 11. Furthermore, an appropriate jitter of 7% or less was obtained when Tc=32/16T and W4/W1 was 2.4% to 19.5%.

The jitter of 7.9% was obtained at 12.64m/s when W4/W1 was 3.6%, Pc=0.75mW and with no Tc.

## Claims

1. A recording and reproducing method for dye-based recordable DVD medium comprising:
recording of a shortest mark by one pulse light of a highest intensity, and
recording of the second shortest and following marks by one pulse light with a pulse power less intense than the pulse power of the shortest mark and both head and tail of the pulse are high powered for a predetermined time,
wherein the recording is performed on the recording layer containing an organic dye formed on a substrate having a guide groove,
wherein the power of irradiated light besides the pulse light which corresponds to the mark formation is 1.2% to 22% based on the pulse power of the shortest mark, and
wherein the recording linear velocity is 12m/s or more during recording of each mark.

2. The recording and reproducing method for dye-based recordable DVD medium according to claim 1, wherein the power of irradiated light besides the pulse light which corresponds to the mark formation is 2.4% to 19.5% based on the pulse power of the shortest mark and the recording linear velocity is 30m/s or more.

3. The recording and reproducing method for dye-based recordable DVD medium according to one of claims 1 and 2, wherein a cooling pulse is placed after the tail of the pulse, the amount of irradiated light is 0.75mW or less and the length of irradiation time is 40/16 or less of the base clock cycle, T.

4. The recording and reproducing method for dye-based recordable DVD medium according to one of claims 1 to 3, wherein the guide groove is formed by wobble grooves and the wobble frequency is 4T to 96T based on the base clock cycle, T.

5. The recording and reproducing method for dye-based recordable DVD medium according to one of claims 1 to 4, wherein the wavelength of the pulse light is 600nm to 720nm.

6. The recording and reproducing method for dye-based recordable DVD medium according to one of claims 1 to 5, wherein the reproduction linear velocity relative to DVD signal is 3.83±0.03m/s.

7. The recording and reproducing method for dye-based recordable DVD medium according to one of claims 1 to 6, wherein the dye-based recordable DVD medium comprises at least one layer selected from reflective layer, protective layer, adhesive layer, protective substrate and hard coated layer on the substrate side on a substrate besides the recording layer.

8. The recording and reproducing method for dye-based recordable DVD medium according to claim 7, wherein the reflective layer comprises gold, silver, aluminum or an alloy thereof.

9. The recording and reproducing method for dye-based recordable DVD medium according to one of claims 1 to 8, wherein the dye-based recordable DVD medium comprises one of single layer structure having at least a recording layer, reflective layer, protective layer on a substrate having a guide groove with a wobble and an additional protective substrate through an adhesive layer, and double layer structure having two structural units each containing at least a recording layer, reflective layer and protective layer on the substrate having a guide groove with a wobble and are attached so as to have the substrate on the outside through an adhesive layer comprising an ultraviolet-curing resin.

10. A dye-based recordable DVD medium used for the recording and reproducing method for dye-based recordable DVD medium according to one of claims 1 to 9.

11. The dye-based recordable DVD medium according to claim 10, wherein the optimum pulse power information of the shortest mark and the power information of irradiated light besides pulse light which corresponds to the mark formation are prerecorded in the guide groove.

12. The dye-based recordable DVD medium according to one of claims 10 and 11, wherein the dye-based recordable DVD medium comprises a substrate and at least one layer selected from recording layer, reflective layer, protective layer, adhesive layer, protective substrate and hard coated layer on the substrate side on the substrate.

13. The dye-based recordable DVD medium according to claim 12, wherein the reflective layer comprises gold, silver, aluminum or an alloy thereof.

14. A recording and reproducing apparatus for dye-based recordable DVD medium comprising:
a unit configured to record a shortest mark by one pulse light of a highest intensity, and
a unit configured to record the second shortest and following marks by one pulse light with a pulse power less intense than the pulse power of the shortest mark and both head and tail of the pulse are high powered for a predetermined time,
wherein the recording is performed on the recording layer containing an organic dye formed on a substrate having a guide groove,
wherein when a record is reproduced by a reproduction light, the power of irradiated light besides the pulse light which corresponds to the mark formation is 1.2% to 22% based on the pulse power of the shortest mark, and
wherein the recording linear velocity is 12m/s or more during recording of each mark.

15. A recording and reproducing apparatus comprising:
a unit configured to set a recording condition using the dye-based recordable DVD medium according to one of claims 10 to 13.
